(19) Europäisches Patentamt
European Patent Office
Office européen des brevets

(11) EP 3 205 767 B1

(12) **EUROPEAN PATENT SPECIFICATION**

(45) Date of publication and mention of the grant of the patent:
**04.12.2019 Bulletin 2019/49**

(21) Application number: **14903580.0**

(22) Date of filing: **07.10.2014**

(51) Int Cl.:
***D06M 15/647*** *(2006.01)* ***D06M 15/65*** *(2006.01)*
***C08J 5/04*** *(2006.01)* ***C08J 5/10*** *(2006.01)*
***C08K 9/06*** *(2006.01)*

(86) International application number:
**PCT/JP2014/076856**

(87) International publication number:
**WO 2016/056070 (14.04.2016 Gazette 2016/15)**

(54) **SIZING AGENT FOR SYNTHETIC FIBERS, REINFORCING FIBER BUNDLE, AND FIBER-REINFORCED COMPOSITE**

SCHLICHTEMITTEL FÜR SYNTHETISCHE FASERN, VERSTÄRKENDES FASERBÜNDEL UND FASERVERSTÄRKTER VERBUNDWERKSTOFF

PRODUIT D'ENCOLLAGE POUR FIBRES SYNTHÉTIQUES, FAISCEAU DE FIBRES DE RENFORCEMENT, ET MATÉRIAU COMPOSITE DE RENFORCEMENT DE FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.08.2017 Bulletin 2017/33**

(73) Proprietor: **Nicca Chemical Co., Ltd.**
**Fukui-shi, Fukui 910-8670 (JP)**

(72) Inventors:
- **UEDA Kana**
  **Fukui-shi**
  **Fukui 910-8670 (JP)**
- **KONDO Takahiro**
  **Fukui-shi**
  **Fukui 910-8670 (JP)**
- **BANKO Hirotomo**
  **Fukui-shi**
  **Fukui 910-8670 (JP)**

(74) Representative: **Boult Wade Tennant LLP**
**Salisbury Square House**
**8 Salisbury Square**
**London EC4Y 8AP (GB)**

(56) References cited:
**WO-A1-2010/140488**
**JP-A- S59 199 872**
**JP-A- S60 215 874**
**JP-A- 2012 184 350**
**JP-A- 2014 095 049**
**JP-A- 2014 218 754**
**US-A1- 2008 152 574**
**US-A1- 2008 261 473**
**US-A1- 2012 021 125**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 205 767 B1

## Description

### Technical Field

The present invention relates to a sizing agent for synthetic fibers that is used for fiber-reinforced composite materials, a reinforcing fiber bundle obtainable using the sizing agent for synthetic fibers, and a fiber-reinforced composite material using the reinforcing fiber bundle.

### Background Art

Fiber-reinforced composite materials, which are resin molded products obtainable by combining various synthetic fiber bundles with resins (referred to as matrix resins), are utilized in numerous fields such as automotive members, aircraft and spacecraft members, civil engineering and construction materials, and sports goods. Examples of the synthetic fibers that are used in such synthetic fiber bundles include various inorganic fibers such as carbon fibers, glass fibers, and ceramic fibers; and various organic fibers such as aramid fibers, polyamide fibers, and polyethylene fibers. Among these, carbon fibers are frequently used because carbon fibers are lightweight and have excellent mechanical strength such as strength and elastic modulus. Such carbon fibers are produced by heating and carbonizing carbon fiber precursors having an oil solution of silicone or the like attached thereto.

The various synthetic fibers described above are usually used in the form of a reinforcing fiber bundle that has been treated with a sizing agent, in order to provide the fibers with bundling properties for suppressing the generation of fluffs or thread breakage during processing.

Regarding the sizing agent, sizing agents that utilize compounds having epoxy groups have been hitherto used. For example, a method of applying diglycidyl ether of bisphenol A on carbon fibers (Patent Literatures 1 and 2), and a method of applying a product obtained by adding an epoxy group to a polyalkylene oxide adduct of bisphenol A on carbon fibers (Patent Literatures 3 and 4) have been proposed. Furthermore, studies have also been made on the use of phenol novolac type epoxy resins.

### Citation List

### Patent Literature

Patent Literature 1: Japanese Unexamined Patent Publication No. S50-059589

Patent Literature 2: Japanese Unexamined Patent Publication No. S57-171767

Patent Literature 3: Japanese Unexamined Patent Publication No. S61-028074

Patent Literature 4: Japanese Unexamined Patent Publication No. H01-272867

### Summary of Invention

### Technical Problem

With regard to a fiber-reinforced composite material, in order for reinforcing fiber bundles to reinforce a matrix resin more effectively, it is essential that the adhesiveness between the reinforcing fiber bundles and the matrix resin is satisfactory. However, in these days where applications and usages of fiber-reinforced composite materials have been diversified and further strength enhancement is desired, there is a problem that satisfying adhesiveness may not be obtained with the methods of Patent Literatures 1 to 4.

Furthermore, when a phenol novolac type epoxy resin is treated with a sizing agent, there is a problem that flexibility of carbon fiber bundles is markedly impaired, and handleability is deteriorated in such a manner that it becomes difficult to wind carbon fiber bundles into a roll.

The present invention was achieved in view of such circumstances, and it is an object of the present invention to provide a sizing agent for synthetic fibers, which can provide a synthetic fiber bundle used for reinforcing a matrix resin of a fiber-reinforced composite material, with excellent adhesiveness to the matrix resin, and can sufficiently suppress deterioration of the flexibility of a synthetic fiber bundle in a reinforcing fiber bundle thus obtainable; a reinforcing fiber bundle obtainable using the sizing agent; and a fiber-reinforced composite material that uses the reinforcing fiber

bundle.

**Solution to Problem**

The inventors of the present invention repeatedly conducted thorough investigations in order to solve the problems described above, and as a result, the inventors found that the problems can be solved by using an organo-modified silicone having, in the molecule, an epoxy group that exhibits affinity with a matrix resin and an alkyl group or aralkyl group that exhibits affinity with a synthetic fiber bundle. Thus, the inventors completed the present invention.

That is, the present invention provides a sizing agent for synthetic fibers, the sizing agent containing an organo-modified silicone represented by the following General Formula (1):

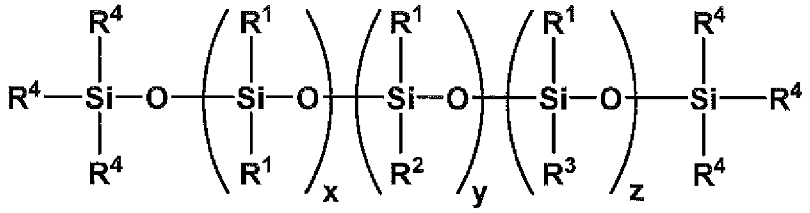 (1)

In Formula (1), $R^1$ represents a hydrogen atom, a methyl group, or an ethyl group; $R^2$ represents a group represented by the following General Formula (2); $R^3$ represents a hydrocarbon group having 8 to 40 carbon atoms and having an aromatic ring, or an alkyl group having 3 to 22 carbon atoms; $R^4$ represents a hydrogen atom, a methyl group or an ethyl group; in a case in which there are two or more $R^1$'s, $R^2$'s, $R^3$'s or $R^4$'s, the respective substituents may be identical or different; x represents an integer of 0 or larger; y and z each represent an integer of 1 or larger; and (x + y + z) is 10 to 200.

$$-R^5\left(O\left(AO\right)_e R^6\right)_f Ep \qquad (2)$$

In Formula (2), $R^5$ represents an alkylene group having 2 to 6 carbon atoms; AO represents an alkyleneoxy group having 2 to 4 carbon atoms; $R^6$ represents an alkylene group having 1 to 6 carbon atoms; e represents an integer from 0 to 4; f represents an integer of 0 or 1; and Ep represents a group represented by the following Formula (3) or the following Formula (4):

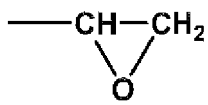 (3)

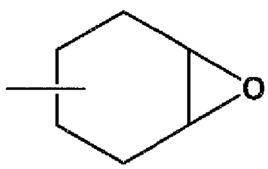 (4)

When the sizing agent for synthetic fibers of the present invention is used, a reinforcing fiber bundle having excellent adhesiveness to a matrix resin can be obtained without significantly impairing flexibility of a synthetic fiber bundle.

Furthermore, the present invention provides a reinforcing fiber bundle having a synthetic fiber bundle and the sizing agent for synthetic fibers according to the present invention, the sizing agent being attached to the synthetic fiber bundle.

The reinforcing fiber bundle of the present invention has excellent adhesiveness to a matrix resin as well as excellent handleability, and can prevent a problem that the reinforcing fiber bundle cannot be wound into a roll. Thus, workability can be enhanced.

The reinforcing fiber bundle of the present invention is preferably such that the synthetic fiber bundle is a carbon fiber bundle.

Furthermore, the present invention provides a fiber-reinforced composite material including a matrix resin and the reinforcing fiber bundle according to the present invention.

## Advantageous Effects of Invention

According to the present invention, a sizing agent for synthetic fibers, which can provide a synthetic fiber bundle that is used for reinforcing a matrix resin of a fiber-reinforced composite material, with excellent adhesiveness to the matrix resin, and can sufficiently suppress deterioration of the flexibility of the synthetic fiber bundle in a reinforcing fiber bundle thus obtainable; a reinforcing fiber bundle obtainable using the sizing agent; and a fiber-reinforced composite material that uses the reinforcing fiber bundle.

## Description of Embodiments

The sizing agent for synthetic fibers of the present embodiment contains an organo-modified silicone represented by the following General Formula (1):

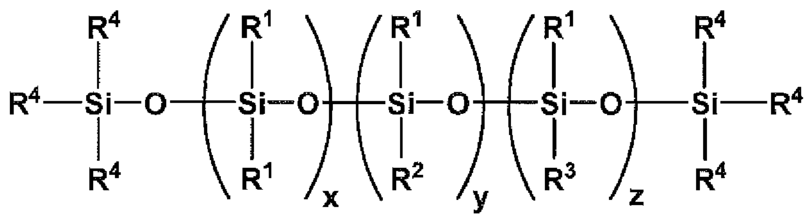

(1)

In Formula (1), $R^1$ represents a hydrogen atom, a methyl group or an ethyl group, and a plurality of $R^1$'s present in the formula may be identical with or different from each other. Among these, a methyl group is preferred from the viewpoint of being industrially more easily available.

In Formula (1), $R^2$ represents a group represented by the following Formula (2), and in a case in which there are numerous $R^2$'s, they may be identical with or different from each other.

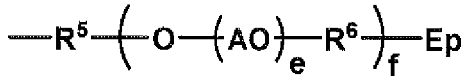

(2)

In Formula (2), $R^5$ represents an alkylene group having 2 to 6 carbon atoms, which may be linear or branched. From the viewpoint that superior adhesiveness is provided and an organo-modified silicone is produced more easily, $R^5$ is preferably an alkylene group having 2 to 4 carbon atoms.

In Formula (2), AO represents an alkyleneoxy group having 2 to 4 carbon atoms, which may be linear or branched, and in a case in which there are numerous AO's, they may be identical or different. From the viewpoint that superior adhesiveness is provided and an organo-modified silicone is produced more easily, AO is preferably an alkyleneoxy group having 2 or 3 carbon atoms.

In Formula (2), $R^6$ represents an alkylene group having 1 to 6 carbon atoms, which may be linear or branched. From the viewpoint that superior adhesiveness is provided and an organo-modified silicone is produced more easily, $R^6$ is preferably an alkylene group having 1 to 4 carbon atoms.

In Formula (2), e represents an integer from 0 to 4. From the viewpoint that superior adhesiveness is provided and an organo-modified silicone is produced more easily, e is preferably 0 to 2.

In Formula (2), f represents an integer of 0 or 1. From the viewpoint of providing superior adhesiveness, f is preferably 1.

In Formula (2), Ep represents a group represented by the following Formula (3) or the following Formula (4):

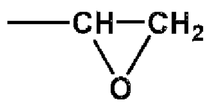

(3)

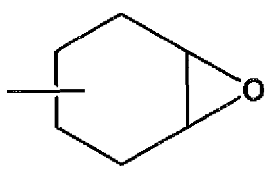

(4)

Ep is preferably a group represented by Formula (3) shown above, from the viewpoint that superior adhesiveness is provided.

In Formula (1), $R^3$ represents a hydrocarbon group having 8 to 40 carbon atoms and having an aromatic ring, or an alkyl group having 3 to 22 carbon atoms, and in a case in which there are numerous $R^3$'s, they may be identical with or different from each other. In a case in which $R^3$ is a hydrocarbon group having an aromatic ring, if the number of carbon atoms is more than 40, the viscosity of the organo-modified silicone becomes too high, and handling is made difficult. Furthermore, in a case in which $R^3$ is an alkyl group, if the number of carbon atoms is more than 22, the viscosity of the organo-modified silicone becomes too high, and handling is made difficult.

Examples of the hydrocarbon group having 8 to 40 carbon atoms and having an aromatic ring include an aralkyl group having 8 to 40 carbon atoms, and a group represented by the following Formula (5) or the following Formula (6):

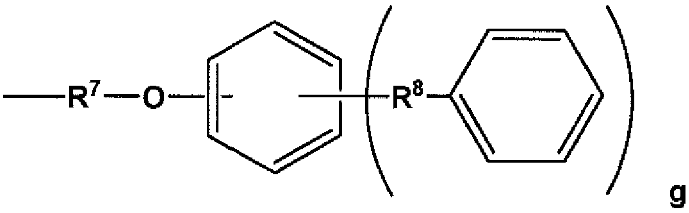

(5)

In Formula (5), $R^7$ represents an alkylene group having 2 to 6 carbon atoms, which may be linear or branched; $R^8$ represents a single bond or an alkylene group having 1 to 4 carbon atoms; and g represents an integer from 0 to 3. From the viewpoint that superior adhesiveness is provided and an organo-modified silicone is produced more easily, $R^7$ is preferably an alkylene group having 2 to 4 carbon atoms. Furthermore, from the viewpoint that an organo-modified silicone is produced more easily, g is preferably 0 or 1.

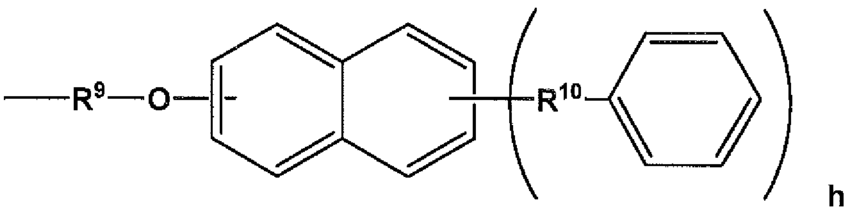

(6)

In Formula (6), $R^9$ represents an alkylene group having 2 to 6 carbon atoms, which may be linear or branched; $R^{10}$ represents a single bond or an alkylene group having 1 to 4 carbon atoms; and h represents an integer from 0 to 3. From the viewpoint that superior adhesiveness is provided and an organo-modified silicone is produced more easily, $R^9$ is preferably an alkylene group having 2 to 4 carbon atoms. Furthermore, from the viewpoint that an organo-modified silicone is produced more easily, h is preferably 0.

Examples of the aralkyl group having 8 to 40 carbon atoms include a phenylethyl group, a phenylpropyl group, a phenylbutyl group, a phenylpentyl group, a phenylhexyl group, and a naphthylethyl group. Among these, from the viewpoint of having superior adhesiveness, a phenylethyl group or a phenylpropyl group is preferred.

From the viewpoint that an organo-modified silicone is produced more easily, among the hydrocarbon groups each having 8 to 40 carbon atoms and having an aromatic ring, the aralkyl group and the group represented by Formula (5) described above are preferred, and from the viewpoint that superior adhesiveness is provided, the aforementioned aralkyl group is more preferred.

The alkyl group having 3 to 22 carbon atoms may be linear or branched, and from the viewpoint that superior adhesiveness is provided, an alkyl group having 4 to 12 carbon atoms is preferred. Examples of such an alkyl group include a butyl group, a pentyl group, a hexyl group, a heptyl group, an octyl group, a nonyl group, a decyl group, an undecyl group, and a dodecyl group.

From the viewpoint that superior adhesiveness is provided, it is preferable that the organo-modified silicone represented by General Formula (1) has a hydrocarbon group having 8 to 40 carbon atoms and having an aromatic ring, as $R^3$. Furthermore, the molar ratio between the hydrocarbon group having 8 to 40 carbon atoms and having an aromatic ring and the alkyl group having 3 to 22 carbon atoms in the organo-modified silicone represented by General Formula (1) is preferably 100 : 0 to 40 : 60.

In Formula (1), $R^4$ represents a hydrogen atom, a methyl group or an ethyl group, and a plurality of $R^4$'s present in the formula may be identical or different. From the viewpoint that the compound is industrially easily available, $R^4$ is a group similar to $R^1$, and above all, a methyl group is preferred.

In Formula (1), x represents an integer of 0 or larger; y and z each represent an integer of 1 or larger; and (x + y + z) is 10 to 200. From the viewpoint that superior adhesiveness is provided, x is preferably 5 or less. From the viewpoint that the compound is industrially easily available and suppression of deterioration of adhesiveness and flexibility is achieved more excellently, it is preferable that (x + y + z) is 40 to 60.

When y and z are both zero (0), adhesiveness tends to decrease. Also, if (x + y + z) is less than 10, adhesiveness is decreased, and suppression of deterioration of flexibility tends to be achieved insufficiently. If (x + y + z) is more than 200, there is a tendency that handling or production is difficult.

From the viewpoint that superior adhesiveness is provided, the molar ratio between the group represented by $R^2$ and the group represented by $R^3$ in the organo-modified silicone represented by General Formula (1) is preferably 10 : 90 to 60 : 40, and more preferably 25 : 75 to 50 : 50.

Meanwhile, General Formula (1) does not mean a block copolymer structure, and the various structural units may be arranged randomly, in a block-like manner, or alternately.

The organo-modified silicone represented by General Formula (1) can be synthesized by a conventionally known method. For example, a method of introducing a substituent into a raw material silicone having a SiH group by a hydrosilylation reaction, and a method of subjecting a cyclic organosiloxane to ring-opening polymerization may be used. Among them, a method of introducing a substituent into a raw material silicone having a SiH group by a hydrosilylation reaction is industrially easier and preferable. In the following description, this method will be described.

A hydrosilylation reaction is a reaction by which a raw material silicone having a SiH group is reacted, stepwise or at once, with an unsaturated compound having a vinyl group, which becomes $R^2$ or $R^3$, in the presence of a catalyst as necessary.

Examples of the raw material silicone include a methylhydrogensilicone having a degree of polymerization of 10 to 200, and a dimethylsiloxane-methylhydrogensiloxane copolymer. Among these, from the viewpoint of being industrially easily available, it is preferable to use a methylhydrogensilicone having a degree of polymerization of 40 to 60.

Examples of the unsaturated compound having a vinyl group include the following compounds.

Examples of the unsaturated compound that becomes $R^2$ include vinyl glycidyl ether, allyl glycidyl ether, and vinylcyclohexene oxide.

Examples of the unsaturated compound that becomes a hydrocarbon group having 8 to 40 carbon atoms and having an aromatic ring as $R^3$ include styrene, $\alpha$-methylstyrene, vinylnaphthalene, allyl phenyl ether, allyl naphthyl ether, allyl p-cumylphenyl ether, allyl o-phenyl phenyl ether, allyl tri(phenylethyl) phenyl ether, and allyl tri(2-phenylpropyl) phenyl ether.

Examples of the unsaturated compound that becomes an alkyl group having 3 to 22 carbon atoms as $R^3$ include $\alpha$-olefins having 3 to 22 carbon atoms, and specific examples include propene, 1-butene, 1-pentene, 1-hexene, 1-heptene, 1-octene, 1-nonene, 1-decene, 1-undecene, and 1-dodecene.

The amounts of use of the raw material silicone and the unsaturated compound that are used for the reaction can be appropriately selected according to the SiH group equivalent, number average molecular weight and the like of the raw material silicone. The SiH group equivalent of the raw material silicone can be determined based on, for example, the amount of hydrogen generated by a reaction between the raw material silicone, an aqueous solution of sodium hydroxide and an alcohol. The number average molecular weight can be determined based on, for example, the number average molecular weight of an alkyl-modified silicone obtainable by introducing an $\alpha$-olefin into the raw material silicone by a hydrosilylation reaction. The number average molecular weight of the alkyl-modified silicone can be determined by, for example, using GPC and employing a method for calculation relative to polyethylene glycol standards.

The reaction temperature and the temperature for the hydrosilylation reaction are not particularly limited and can be appropriately adjusted. The reaction temperature is, for example, 10°C to 200°C, and preferably 50°C to 150°C, and the reaction time is, for example, 6 to 12 hours when the reaction temperature is 50°C to 150°C. The reaction proceeds even in the absence of a solvent; however, a solvent may be used. Regarding the solvent, for example, dioxane, methyl isobutyl ketone, toluene, xylene, or butyl acetate is used.

The sizing agent for synthetic fibers of the present embodiment, which uses the organo-modified silicone having a particular structure described above, can impart not only bundling properties but also excellent adhesiveness to a synthetic fiber bundle that constitutes a reinforcing fiber bundle, and can sufficiently suppress deterioration of flexibility of the synthetic fiber bundle.

In regard to the sizing agent for synthetic fibers of the present embodiment, the organo-modified silicone represented by General Formula (1) may be used directly as a sizing agent, or the organo-modified silicone may be dispersed or dissolved in an organic solvent, water, or a mixed liquid of an organic solvent and water, and the resultant may be used as a sizing agent. Examples of the organic solvent that can be used include alcohols such as methyl alcohol, ethyl alcohol, and isopropyl alcohol; glycols or glycol ethers, such as ethylene glycol, propylene glycol, ethylene glycol monoisopropyl ether, and ethylene glycol monobutyl ether; ketones such as acetone and methyl ethyl ketone; and toluene.

The content of the organo-modified silicone represented by General Formula (1) in the sizing agent for synthetic

fibers of the present embodiment can be appropriately regulated according to the stability or viscosity of the sizing agent, or the organo-modified silicone to be used; however, the content may be an amount of 50% to 100% by mass.

Examples of other components that can be added to the sizing agent for synthetic fibers of the present embodiment include various surfactants, various smoothing agents, an oxidation inhibitor, a flame retardant, an antibacterial agent, and an antifoaming agent. Furthermore, for the purpose of enhancing the abrasion resistance of a reinforcing fiber bundle or enhancing the impregnability of a matrix resin, resins such as a polyurethane resin, a polyester resin, a polyamide resin, and an epoxy resin other than the organo-modified silicone represented by General Formula (1), and the like may also be added to the sizing agent. These additive components may be used singly or in combination of two or more kinds thereof.

Particularly, regarding the surfactants, in a case in which water is used as the solvent or dispersing medium for the sizing agent for synthetic fibers of the present embodiment, emulsification can be efficiently performed by using the surfactants as emulsifiers. The surfactants are not particularly limited, and known agents can be appropriately selected and used. The surfactants may be used singly or in combination of two or more kinds thereof.

The method for producing the sizing agent for synthetic fibers of the present embodiment is not particularly limited, and any known method can be employed. For example, the sizing agent can be produced by mixing with stirring an organic solvent with the organo-modified silicone represented by General Formula (1), or can also be produced by further mixing with stirring water or other components into the resulting mixture as necessary.

Next, a reinforcing fiber bundle according to the present invention will be described.

The reinforcing fiber bundle of the present embodiment includes a synthetic fiber bundle and the sizing agent for synthetic fibers of the present embodiment, the sizing agent being attached to the synthetic fiber bundle. The reinforcing fiber bundle of the present embodiment can be obtained by treating a synthetic fiber bundle that is used in a fiber-reinforced composite material, with the sizing agent for synthetic fibers of the present embodiment, and the reinforcing fiber bundle is used in order to reinforce a matrix resin and obtain a fiber-reinforced composite material.

The treatment is carried out by attaching the sizing agent to a synthetic fiber bundle. When the sizing agent for synthetic fibers of the present embodiment is used, not only a function of imparting bundling properties to a synthetic fiber bundle, that is, a function as a fabric size, but also imparting of excellent adhesiveness to a matrix resin and sufficient retention of flexibility of a synthetic fiber bundle can be achieved.

The amount of attachment of the sizing agent to a synthetic fiber bundle can be appropriately selected, and for example, the content is preferably an amount such that the amount of attachment of the organo-modified silicone represented by General Formula (1) becomes 0.05% to 10% by mass, and more preferably 0.1% to 5% by mass, based on the mass of the synthetic fiber bundle.

When the amount of attachment of the sizing agent is such that the amount of attachment of the organo-modified silicone is within the range described above, adhesiveness adequate for the applied amount is easily obtained, and handleability being deteriorated due to insufficient bundling properties of the synthetic fiber bundle can be suppressed without significant economic disadvantages.

There are no particular limitations on the method of attaching the sizing agent of the present embodiment to a synthetic fiber bundle, and the sizing agent can be attached by a kiss roller method, a roller immersion method, a spraying method, a dipping method, or other known methods. Furthermore, when the sizing agent is attached, the sizing agent of the present embodiment may be attached directly to a synthetic fiber bundle by the methods described above, or a treatment liquid containing the sizing agent may be produced, and the treatment liquid may be attached to a synthetic fiber bundle by the methods described above.

The concentration of the treatment liquid may be a concentration at which the concentration of the organo-modified silicone represented by General Formula (1) becomes 0.5% to 60% by mass. Examples of the solvent used for the treatment liquid include the above-mentioned organic solvents, and water.

The method for drying after attaching the sizing agent to a synthetic fiber bundle is not particularly limited, and for example, a method of drying by heating using a heating roller, hot air, a hot plate or the like for 10 seconds to 10 minutes at a temperature of 90°C to 300°C, and more suitably for 30 seconds to 4 minutes at a temperature of 100°C to 250°C, may be used.

A thermosetting resin such as a vinyl ester resin or an epoxy resin other than the organosilicone, or a thermoplastic resin such as a urethane resin, a polyester resin, a nylon resin or an acrylic resin may be attached to the synthetic fiber bundle to the extent that the effects of the present invention are not impaired.

The kind of the synthetic fiber bundle to which the sizing agent for synthetic fibers of the present embodiment is not particularly limited as long as the fibers are synthetic fibers used in fiber-reinforced composite material, and examples thereof include various inorganic fibers such as carbon fibers, glass fibers, and ceramic fibers; and various organic fibers such as aramid fibers, polyethylene fibers, polyethylene terephthalate fibers, polybutylene terephthalate fibers, polyethylene naphthalate fibers, polyallylate fibers, polyacetal fibers, PBO fibers, polyphenylene sulfide fibers, and polyketone fibers.

Among the fibers described above, from the viewpoint of having superior affinity with the organo-modified

silicone represented by General Formula (1) and having more enhanced adhesiveness to a matrix resin, carbon fibers are preferred. The form of the carbon fibers is not particularly limited, and examples include several thousand to several ten thousand strands of known carbon fiber filaments such as polyacrylonitrile (PAN)-based, rayon-based or pitch-based carbon fiber filaments bundled together. According to the present embodiment, it is preferable that the sizing agent for synthetic fibers of the present embodiment is attached to a bundle of carbon fibers that have been sufficiently carbonized through a heating and carbonization treatment. Such carbon fibers are more preferably carbon fibers composed of carbon at a proportion of 90% or more as a mass ratio.

Examples of the form of use of the reinforcing fiber bundle of the present embodiment include forms such as a bundle, a woven fabric, a knitted fabric, a braid, a web, and a mat. The form of the reinforcing fiber bundle can be appropriately selected according to the purpose or method of use.

When the reinforcing fiber bundle of the present embodiment is used, since the reinforcing fiber bundle has been treated with the sizing agent of the present embodiment, affinity with a matrix resin is improved, thus sufficient adhesiveness is obtained, and a fiber-reinforced composite material having excellent strength can be obtained. Furthermore, the reinforcing fiber bundle of the present embodiment exhibits excellent roll-windability and handleability, since flexibility of the synthetic fibers can be sufficiently maintained.

Next, the fiber-reinforced composite material according to the invention will be described.

The fiber-reinforced composite material of the present embodiment includes a matrix resin and the reinforcing fiber bundle of the present embodiment.

The matrix resin may be a thermosetting resin or a thermoplastic resin; however, from the viewpoint of having superior affinity with the organo-modified silicone represented by General Formula (1) and having further enhanced adhesiveness to a reinforcing fiber bundle, a thermosetting resin is preferred.

Examples of the thermosetting resin include an epoxy resin, an unsaturated polyester resin, a vinyl ester resin, a phenolic resin, a melamine resin, a urea resin, a cyanate ester resin, and a bismaleimide resin. Examples of the thermoplastic resin include a polyolefin-based resin, a polyamide-based resin, a polycarbonate-based resin, and a polyphenylene sulfide-based resin.

Among these, from the viewpoint of having superior affinity with the organo-modified silicone represented by General Formula (1) and having superior enhancement of adhesiveness, an epoxy resin is preferred. Regarding the epoxy resin, resins of a glycidyl ether type, a glycidyl ester type, a glycidyl amine type, and an alicyclic type can all be used. Specifically, epoxy resins of a bisphenol A type, a bisphenol F type, a bisphenol S type, a biphenyl type, a naphthalene type, a fluorene type, a phenol novolac type, an aminophenol, and an aniline type are used.

The method for producing the fiber-reinforced composite material of the present embodiment is not particularly limited, and any conventionally known method can be employed.

In a case in which the matrix resin is a thermosetting resin, for example, a method of impregnating the fiber-reinforced bundle of the present embodiment with a matrix resin, and then heating the matrix resin to cure; or a method of producing a prepreg by impregnating the reinforcing fiber bundle of the present embodiment with a matrix resin, laminating prepregs, and then heating the matrix resin to cure while applying pressure to the laminate, may be used.

In regard to these methods, it is preferable that two liquids, namely, a main agent of the matrix resin and a curing agent, are mixed immediately before use, and then the mixture is used.

The reinforcing fiber bundle of the present embodiment is used in the forms described above, for example, and the form can be appropriately selected according to the purpose or method of use.

The prepreg described above is also included as a class of the fiber-reinforced composite material of the present embodiment, and examples of the method for producing the prepreg include a wet method of dissolving a matrix resin in a solvent such as methyl ethyl ketone or methanol to lower the viscosity, and impregnating the reinforcing fiber bundle of the present embodiment with the low viscosity solution; and a hot melt method (dry method) of lowering the viscosity of the matrix resin by heating, and impregnating the reinforcing fiber bundle of the present embodiment with the low viscosity resin. In this case, it is preferable that the synthetic fibers of the reinforcing fiber bundle of the present embodiment are carbon fibers.

Furthermore, in a case in which the matrix resin is a thermoplastic resin, for example, a method of molding the matrix resin according to molding methods such as injection molding, blow molding, rotational molding, extrusion molding, press molding, transfer molding, and filament winding molding, may be employed. Among these, from the viewpoint of productivity, injection molding is preferably used. In these molding processes, the reinforcing fiber bundle of the present embodiment is used in the form of a pellet or a prepreg as the molding material, and these pellet and prepreg are also included as a class of the fiber-reinforced composite material of the present embodiment.

The pellet used for injection molding generally refers to a product obtained by kneading a thermoplastic resin and chopped fibers or continuous fibers in an extruding machine, extruding the kneaded product, and pelletizing the kneaded product. The aforementioned pellet includes a long fiber pellet, too. A long fiber pellet refers to a pellet as disclosed in Japanese Examined Patent Publication No. S63-37694 B, in which fibers are arranged to be almost parallel to the longitudinal direction of the pellet, and the length of the fibers in the pellet is equal to or longer than the length of

the pellet. In this case, the thermoplastic resin may be impregnated into the reinforcing fiber bundle or may be coated thereon.

The content of the reinforcing fiber bundle of the present embodiment in the fiber-reinforced composite material of the present embodiment is not particularly limited, and the content may be appropriately selected according to the fiber type and form of the reinforcing fiber bundle, the type of the matrix resin, and the like. The content may be an amount such as 5% to 70% by mass with respect to the total mass of the matrix resin and the reinforcing fiber bundle.

**EXAMPLES**

Hereinafter, the present invention will be described in more detail by way of Examples; however, the present invention is not intended to be limited to these Examples.

[Production of sizing agent reinforcing fiber bundle]

A methylhydrogensilicone represented by the following formula was prepared as a raw material silicone.

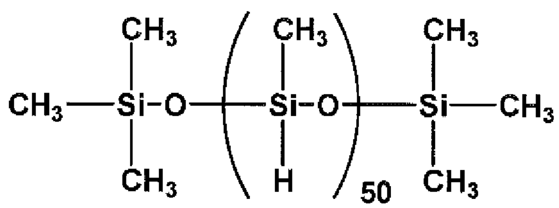

Furthermore, as a synthetic fiber bundle, commercially available carbon fibers (product name: TR50S15L, manufactured by MITSUBISHI RAYON CO., LTD., fiber tensile strength: 4,900 MPa) that were washed with acetone to remove the sizing agent attached thereto, were prepared as a carbon fiber bundle.

(Example 1)

A raw material silicone (63 g) was introduced into a reaction vessel equipped with a stirrer, a thermometer, a reflux cooler, a nitrogen gas inlet tube and a dropping funnel, a stream of nitrogen was blown thereinto, and the silicone was mixed until a uniform state was obtained, while being heated until the temperature reached 65°C. An ethylene glycol monobutyl ether-toluene mixed solution of platinum(IV) chloride as a hydrosilylation catalyst was added to the reaction vessel such that the platinum concentration with respect to the reaction product in the system would be 5 ppm. When the temperature of the reaction product reached 120°C, 0.9 mol of $\alpha$-methylstyrene (106.2 g) was added dropwise thereto, and the mixture was allowed to react for 1 hour at 120°C.

Subsequently, 0.1 mol of allyl glycidyl ether (11.4 g) was added dropwise to the mixture, and the reaction was allowed to react for 3 hours at 120°C. Thus, an addition reaction was completed. Confirmation of the completion of the addition reaction was conducted by performing an FT-IR analysis of the organo-modified silicone thus obtained, and checking that the absorption spectrum originating from the SiH group of the raw material silicone disappeared.

The organo-modified silicone thus obtained was mixed with acetone, and a sizing agent having an organo-modified silicone concentration of 10% by mass was obtained.

The carbon fiber bundle was subjected to a dipping treatment with the sizing agent thus obtained, and the carbon fiber bundle was squeezed and then dried in hot air for 3 minutes at 100°C. Thus, a reinforcing carbon fiber bundle in which the amount of attachment of the organo-modified silicone was 2% by mass based on the mass of the carbon fiber bundle was obtained.

(Examples 2 to 6)

Organo-modified silicones were obtained in the same manner as in Example 1, except that the unsaturated compound having a vinyl group, which was to be reacted with the raw material silicone, was changed as indicated in Table 1 or 2. Also, sizing agents and reinforcing carbon fiber bundles were obtained in the same manner as in Example 1, except that the organo-modified silicones thus obtained were used.

(Comparative Example 1)

An organo-modified silicone was obtained in the same manner as in Example 1, except that the unsaturated

compound having a vinyl group, which was to be reacted with the raw material silicone, was changed as indicated in Table 2. Furthermore, a sizing agent and reinforcing carbon fiber bundle were obtained in the same manner as in Example 1, except that the organo-modified silicone thus obtained was used.

(Comparative Example 2)

A sizing agent and a reinforcing carbon fiber bundle were obtained in the same manner as in Example 1, except that a bisphenol A type epoxy resin (product name: jER828, manufactured by Mitsubishi Chemical Corporation, molecular weight: about 370, compound represented by the following formula) was used instead of the organo-modified silicone used in Example 1.

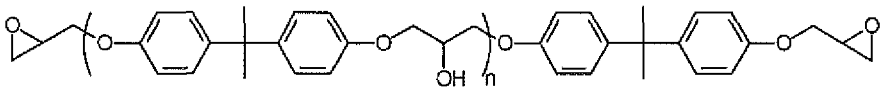

(Comparative Example 3)

A sizing agent and a reinforcing carbon fiber bundle were obtained in the same manner as in Example 1, except that a phenol novolac type epoxy resin (product name: EPOTOTE YDPN-638, manufactured by NIPPON STEEL & SUMIKIN CHEMICAL CO., LTD.) was used instead of the organo-modified silicone used in Example 1.

(Comparative Example 4)

A sizing agent and a reinforcing carbon fiber bundle were obtained in the same manner as in Example 1, except that an epoxy-modified silicone (product name: X-22-343, functional group equivalent: 525 g/mol, manufactured by Shin-Etsu Chemical Co., Ltd.) was used instead of the organo-modified silicone used in Example 1.

(Comparative Example 5)

An epoxy-modified silicone (product name: X-22-343, functional group equivalent: 525 g/mol, manufactured by Shin-Etsu Chemical Co., Ltd.) and an alkylaralkyl-modified silicone (product name: X-22-1877, manufactured by Shin-Etsu Chemical Co., Ltd.) were mixed at a mass ratio of 50 : 50. A sizing agent and a reinforcing carbon fiber bundle were obtained in the same manner as in Example 1, except that this mixture was used instead of the organo-modified silicone used in Example 1.

(Comparative Example 6)

A carbon fiber bundle was used without treating the carbon fiber bundle with a sizing agent.

[Performance evaluation]

For the reinforcing carbon fiber bundles obtained as described above, bundling properties, adhesiveness and flexibility were evaluated by the following methods. The results are presented in Table 1 to Table 3.

<Bundling properties>

First, the upper end of a reinforcing fiber bundle having a length of 50 cm was fixed, and a load of 50 g was hung down at the lower end of the reinforcing fiber bundle. Subsequently, the reinforcing fiber bundle was cut with sharp scissors at a site about 20 cm away from the lower end, and the maximum diameter of a cross-section of the reinforcing fiber bundle of the side that was kept hung down was measured. A smaller maximum diameter indicates more satisfactory bundling properties.

<Adhesiveness>

The adhesiveness between the reinforcing fiber bundle and the matrix resin was evaluated using the interfacial shear strength measured by a filament implantation (fragmentation) method. Higher interfacial shear strength indicates superior adhesiveness. Specifically, the evaluation was performed by the following procedure.
First, one filament was pulled out from a reinforcing fiber bundle thus obtained, this was embedded in a matrix

resin, and thus a specimen was produced. This specimen was subjected to a tension higher than the elongation at breakage of the fibers (tensile test was performed). The number of fractures on the filaments that fractured within the matrix resin was read using a polarized microscope, and the average value of the fractured fiber lengths (average fiber length) was determined from the number of fractures and the filament length. Thus, the interfacial shear strength was calculated by the following expression.

$$\text{Critical fiber length (mm)} = 4 \times \text{Average fiber length (mm)}/3$$

$$\text{Interfacial shear strength (MPa)} = \text{Fiber tensile strength (MPa)} \times (\text{fiber diameter (mm)} / 2) \times \text{critical fiber length (mm)}$$

Meanwhile, the fiber tensile strength is an intrinsic property value of fibers, and the fiber tensile strength of the carbon fiber bundles used in the Examples is 4,900 MPa as described above. Furthermore, the matrix resin used for the production of the specimen was a product obtained by mixing 100 parts of a bisphenol A type epoxy resin (product name: jER828, manufactured by Mitsubishi Chemical Corporation), 8 parts of dicyandiamide as a curing agent, and 4 parts of 3-(3,4-dichlorophenyl)-1,1-dimethylurea as a curing accelerator, pouring this mixture into a mold in which one filament was immobilized, and curing the mixture for 1 hour at a temperature of 120°C. The tensile test was performed at a temperature of 20°C and a humidity of 65%, and tension was applied to the specimen to the extent that the specimen did not fracture (elongation 5%).

<Flexibility>

Flexibility was evaluated by measuring the resistance force obtainable when the reinforcing fiber bundle was pressed from the above, using a handle-o-meter (manufactured by KUMAGAI RIKI KOGYO Co., Ltd.) used in Method E (handle-o-meter method) of JIS L 1096 (2010). The measurement was performed three times, by setting the slot width to 20 mm, and applying a load at the center of a reinforcing fiber bundle having a length of 30 cm. The average values of the measurement values are presented in the table. A smaller value indicates that the reinforcing fiber bundle is more flexible.

[Table 1]

| | | Example 1 | Example 2 | Example 3 | Example 4 |
|---|---|---|---|---|---|
| Raw material (mol) | Allyl glycidyl ether | 0.1 | 0.25 | 0.4 | 0.5 |
| | α-Methylstyrene | 0.9 | 0.75 | 0.6 | 0.5 |
| | 1-Dodecene | - | - | - | - |
| Structure of organo-modified silicone | $R^2$ | 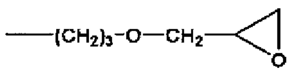 | 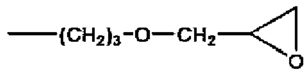 | 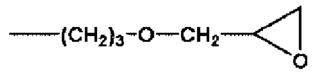 | 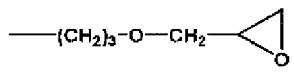 |
| | $R^3$ | 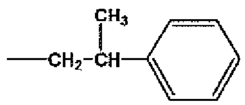 | 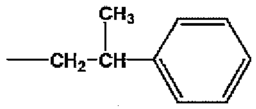 | 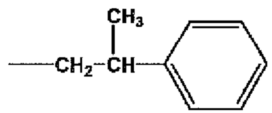 | 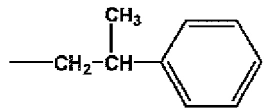 |
| | $R^2 : R^3$ | 10 : 90 | 25 : 75 | 40 : 60 | 50 : 50 |
| Performance evaluation | Bundling properties (mm) | 3 | 4 | 3 | 3 |
| | Interfacial shear strength (MPa) | 21.9 | 25.6 | 24.0 | 24.5 |
| | Flexibility ($gm/s^2$) | 48.1 | 48.1 | 40.2 | 52.0 |
| In the table, $R^2$ and $R^3$ represent groups corresponding to $R^2$ and $R^3$ of General Formula (1), and the ratio $R^2 : R^3$ represents a molar ratio. | | | | | |

[Table 2]

| | | Example 5 | Example 6 | Comparative Example 1 |
|---|---|---|---|---|
| Raw material (mol) | Allyl glycidyl ether | 0.6 | 0.5 | - |
| | α-Methylstyrene | 0.4 | - | 0.5 |
| | 1-Dodecene | - | 0.5 | 0.5 |
| Structure of organo-modified silicone | $R^2$ | 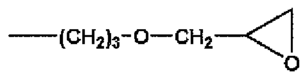 | 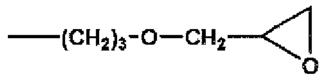 | - |
| | $R^3$ | 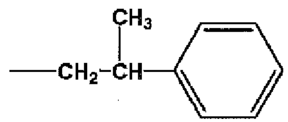 | $-(CH_2)_{11}-CH_3$ | 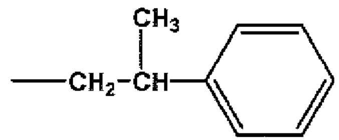 $-(CH_2)_{11}-CH_3$ |
| | $R^2 : R^3$ | 60 : 40 | 50 : 50 | 0 : 100 |
| Performance evaluation | Bundling properties (mm) | 4 | 4 | 3 |
| | Interfacial shear strength (MPa) | 21.6 | 20.3 | 12.8 |
| | Flexibility ($gm/s^2$) | 59.8 | 37.3 | 44.1 |
| In the table, $R^2$ and $R^3$ represent groups corresponding to $R^2$ and $R^3$ of General Formula (1), and the ratio $R^2 : R^3$ represents a molar ratio. | | | | |

[Table 3]

| | | Comparative Example 2 | Comparative Example 3 | Comparative Example 4 | Comparative Example 5 | Comparative Example 6 |
|---|---|---|---|---|---|---|
| Effective component of sizing agent | | Bisphenol A type epoxy resin | Phenol novolac type epoxy resin | Epoxy-modified silicone | Epoxy-modified silicone, alkylaralkyl-modified silicone | - (Not treated with sizing agent) |
| Performance evaluation | Bundling properties (mm) | 3 | 2 | 4 | 3 | 6 |
| | Interfacial shear strength (MPa) | 17.5 | 25.6 | 18.3 | 14.3 | 17.8 |
| | Flexibility (gm/$s^2$) | 46.1 | 697.3 | 32.4 | 46.1 | 19.6 |

As can be seen from the results of Table 1 and Table 2, the sizing agent of the present invention can simultaneously achieve sufficient maintenance of flexibility of a reinforcing carbon fiber bundle, and imparting of excellent adhesiveness to a matrix resin.

## Industrial Applicability

A fiber-reinforced composite material having excellent adhesiveness between a matrix resin and a reinforcing fiber bundle can be obtained by using the sizing agent and the reinforcing fiber bundle of the present invention. Also, since the reinforcing fiber bundle of the present invention obtainable using the sizing agent of the present invention exhibits satisfactory handleability, workability can also be enhanced.

A fiber-reinforced composite material thus obtained is useful for various component parts and members such as automotive parts and interior members, and casings.

## Claims

1. A sizing agent for synthetic fibers, comprising an organo-modified silicone represented by the following General Formula (1):

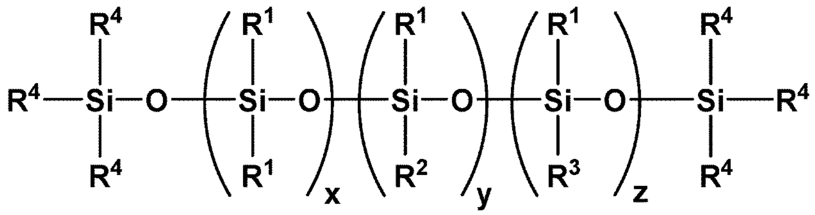

(1)

wherein in Formula (1), $R^1$ represents a hydrogen atom, a methyl group or an ethyl group; $R^2$ represents a group represented by the following General Formula (2); $R^3$ represents a hydrocarbon group having 8 to 40 carbon atoms and having an aromatic ring, or an alkyl group having 3 to 22 carbon atoms; $R^4$ represents a hydrogen atom, a methyl group or an ethyl group; in a case in which there are two or more $R^1$, $R^2$, $R^3$ or $R^4$, the substituents may be respectively identical with or different from each other; x represents an integer of 0 or more; y and z each represent an integer of 1 or more; and (x + y + z) is 10 to 200,

$$-R^5\left(O\left(AO\right)_e R^6\right)_f Ep \qquad (2)$$

wherein in Formula (2), $R^5$ represents an alkylene group having 2 to 6 carbon atoms; AO represents an alkyleneoxy group having 2 to 4 carbon atoms; $R^6$ represents an alkylene group having 1 to 6 carbon atoms; e represents an integer from 0 to 4; f represents an integer of 0 or 1; and Ep represents a group represented by the following Formula (3) or the following Formula (4):

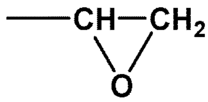

(3)

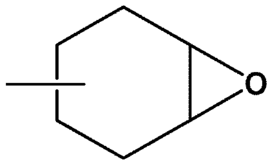

(4)

2. A reinforcing fiber bundle comprising a synthetic fiber bundle; and the sizing agent for synthetic fibers according to claim 1, the sizing agent being attached to the synthetic fiber bundle.

3. The reinforcing fiber bundle according to claim 2, wherein the synthetic fiber bundle is a carbon fiber bundle.

4. A fiber-reinforced composite material comprising a matrix resin; and the reinforcing fiber bundle according to claim 2 or 3.

## Patentansprüche

1. Beschlichtungsmittel für synthetische Fasern, umfassend ein organomodifiziertes Silikon, dargestellt durch die folgende allgemeine Formel (1):

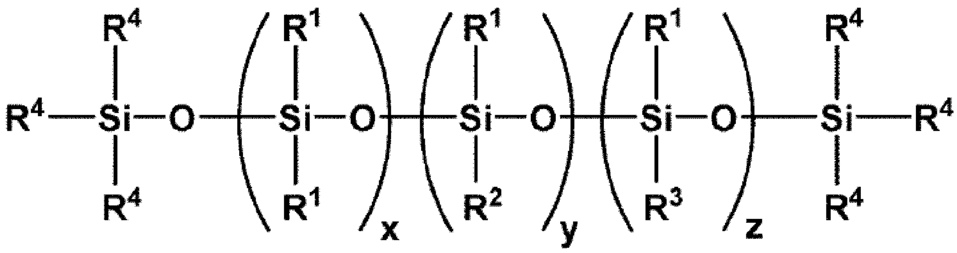

(1)

wobei in Formel (1) $R^1$ ein Wasserstoffatom, eine Methylgruppe oder eine Ethylgruppe darstellt; $R^2$ eine Gruppe darstellt, die durch die folgende allgemeine Formel (2) dargestellt wird; $R^3$ eine Kohlenwasserstoffgruppe mit 8 bis 40 Kohlenstoffatomen darstellt und einen aromatischen Ring oder eine Alkylgruppe mit 3 bis 22 Kohlenstoffatomen aufweist; $R^4$ ein Wasserstoffatom, eine Methylgruppe oder eine Ethylgruppe darstellt; in einem Fall, in dem es zwei oder mehr $R^1$, $R^2$, $R^3$ oder $R^4$ gibt, die Substituenten jeweils identisch oder voneinander verschieden sein können; x eine ganze Zahl von 0 oder mehr darstellt; y und z jeweils eine ganze Zahl von 1 oder mehr darstellen; und (x + y + z) 10 bis 200 ist,

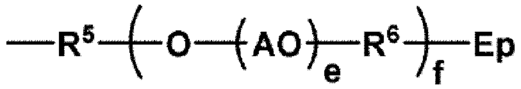

(2)

wobei in Formel (2) $R^5$ eine Alkylengruppe mit 2 bis 6 Kohlenstoffatomen darstellt; AO eine Alkylenoxygruppe mit 2 bis 4 Kohlenstoffatomen darstellt; $R^6$ eine Alkylengruppe mit 1 bis 6 Kohlenstoffatomen darstellt; e eine ganze Zahl von 0 bis 4 darstellt; f eine ganze Zahl von 0 oder 1 darstellt; und Ep eine Gruppe darstellt, die durch die folgende Formel (3) oder die folgende Formel (4) dargestellt wird:

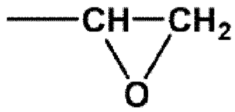 (3)

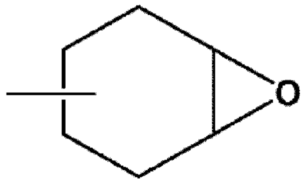 (4)

2. Verstärkungsfaserbündel, umfassend ein Kunstfaserbündel; und das Beschlichtungsmittel für Kunstfasern nach Anspruch 1, wobei das Beschlichtungsmittel an das Kunstfaserbündel gebunden ist.

3. Verstärkungsfaserbündel nach Anspruch 2, wobei das Kunstfaserbündel ein Kohlefaserbündel ist.

4. Faserverstärktes Verbundmaterial, umfassend ein Matrixharz; und das Verstärkungsfaserbündel nach Anspruch 2 oder 3.

## Revendications

1. Agent d'encollage pour fibres synthétiques, comprenant une silicone organo-modifiée représentée par la Formule Générale (1) suivante :

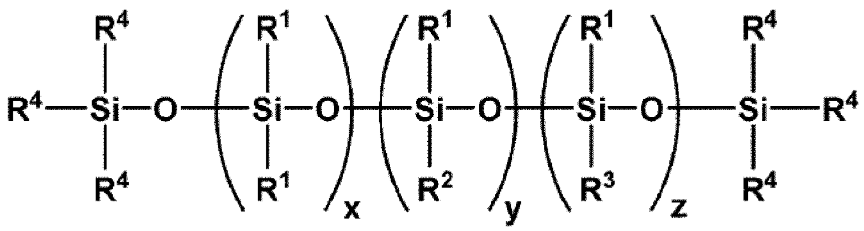 (1)

où dans la Formule (1), $R^1$ représente un atome d'hydrogène, un groupe méthyle ou un groupe éthyle ; $R^2$ représente un groupe représenté par la Formule Générale (2) suivante ; $R^3$ représente un groupe hydrocarboné ayant 8 à 40 atomes de carbone et ayant un noyau aromatique, ou un groupe alkyle ayant 3 à 22 atomes de carbone ; $R^4$ représente un atome d'hydrogène, un groupe méthyle ou un groupe éthyle ; dans un cas où il y a deux ou plus de deux $R^1$, $R^2$, $R^3$ ou $R^4$, les substituants peuvent être respectivement identiques ou différents les uns des autres ; x représente un nombre entier supérieur ou égal à 0 ; y et z représentent chacun un nombre entier supérieur ou égal à 1 ; et la somme (x + y + z) est comprise entre 10 et 200,

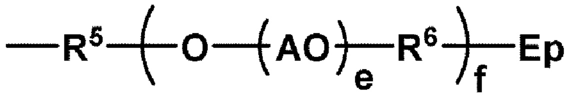 (2)

où dans la Formule (2), $R^5$ représente un groupe alkylène ayant 2 à 6 atomes de carbone ; AO représente un groupe alkylèneoxy ayant 2 à 4 atomes de carbone ; $R^6$ représente un groupe alkylène ayant 1 à 6 atomes de carbone ; e représente un nombre entier compris entre 0 et 4 ; f représente un nombre entier égal à 0 ou 1 ; et Ep représente un groupe représenté par la Formule (3) suivante ou la Formule (4) suivante :

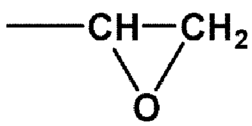 (3)

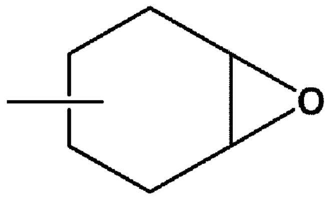

(4)

2. Faisceau de fibres de renfort comprenant un faisceau de fibres synthétiques ; et l'agent d'encollage pour fibres synthétiques selon la revendication 1, l'agent d'encollage étant fixé au faisceau de fibres synthétiques.

3. Faisceau de fibres de renfort selon la revendication 2, dans lequel le faisceau de fibres synthétiques est un faisceau de fibres de carbone.

4. Matériau composite renforcé par des fibres comprenant une résine matricielle ; et le faisceau de fibres de renfort selon la revendication 2 ou 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S50059589 B
- JP S57171767 B
- JP S61028074 B
- JP H01272867 B
- JP S6337694 B